# EUROPEAN PATENT SPECIFICATION

(11) **EP 2 695 852 B1**
(45) Date of publication and mention of the grant of the patent: **03.06.2020**
(21) Application number: 12461535.2
(22) Date of filing: 08.08.2012
(51) Int. Cl.: C01B 3/06

(54) **Hydrogen generation from sodium borohydride**
Wasserstofferzeugung aus Natriumborhydrid
Génération d'hydrogène à partir de borohydrure de sodium

(43) Date of publication of application: 12.02.2014
(73) Proprietor: Airbus Defence and Space GmbH, 82024 Taufkirchen (DE)
(72) Inventor: Godula-Jopek, Agata, 82024 Taufkirchen (DE); Brandstetter, Armin, 81927 München (DE); Stobinski, Leszek, 03-337 Warszawa (PL)
(74) Representative: LKGLOBAL Lorenz & Kopf PartG mbB Patentanwälte

(56) References cited:
- WO-A1-2008/144038
- US-A1- 2006 228 293
- M L. CHRISTIAN ET AL: "Core-Shell Strategy Leading to High Reversible Hydrogen Storage Capacity for NaBH 4", ACS NANO, vol. 6, no. 9, 8 August 2012 (2012-08-08), pages 7739-7751, XP055046090, ISSN: 1936-0851, DOI: 10.1021/nn3030018
- CUSHING B L ET AL: "Recent Advances in the Liquid-Phase Syntheses of Inorganic Nanoparticles", CHEMICAL REVIEWS, AMERICAN CHEMICAL SOCIETY, US, vol. 104, 20 August 2004 (2004-08-20), pages 3893-3946, XP002514251, ISSN: 0009-2665, DOI: 10.1021/CR030027B [retrieved on 2004-08-20]
- "Size reduction with Planetary Ball Mills", 12 August 2014 (2014-08-12), Retsch GmbH, Haan, Germany
- "Mill(grinding)", WIkipedia , 12 August 2014 (2014-08-12), Retrieved from the Internet: URL:https://en.wikipedia.org/wiki/Mill_(gr inding) [retrieved on 2014-08-12]
- "Nanoparticle", Wikipedia , 12 August 2014 (2014-08-12), Retrieved from the Internet: URL:https://en.wikipedia.org/wiki/Nanopart icle [retrieved on 2014-08-12]

## Description

The present invention is directed to a method for generating hydrogen from sodium borohydride as well as a sodium borohydride-containing suspension and the use of sodium borohydride particles having a mean particle size *d*₅₀ of from 1 to 250 nm for generating hydrogen.

Metal borohydrides are widely used as hydrogen storage materials. The particular interest for such hydrides resides in the fact that their volumetric hydrogen densities are positive and, thus, allow the storage of large quantities of hydrogen in a small volume. In this regard, a wide variety of metal borohydrides are known of which sodium borohydride has the highest specific hydrogen yield and is thus preferably used as hydrogen storage material. The hydrogen release is initiated by contacting the sodium borohydride with water such that the borohydride decomposes in accordance with formula I:

NaBH₄ + 2H₂O → 4H₂ + NaBO₂ + Q I

The existing hydrogen storage materials comprising sodium borohydride are typically provided in solid forms such as powders having large particle sizes such as of above 500 nm or granules or pressed into pellets comprising such powders. One problem with said powders, granules and pellets however is that these forms severely decrease the solubility in water and thus its reaction rate with water. Furthermore, said form also decreases the available surface area of the sodium borohydride particles. Accordingly, the provision of powders having large particle sizes such as of above 500 nm or granules and pellets comprising such particles results in decreased hydrogen release efficiency. Consequently, a high demand of hydrogen requires large amounts of pellets or granules. Furthermore, sodium borohydride is hygroscopic by nature and thus a relatively short contact time of sodium borohydride with e.g. watery air may actually lead to an uncontrolled release of hydrogen from the borohydride.

In the art, several approaches for improving the hydrogen release from sodium borohydride have been proposed. For example, US 6,534,033 B1 describes a hydrogen generation system including a stabilized metal hydride solution and a catalyst system. It is described that useful stabilizing agents include the corresponding hydroxide of the cation part of the metal hydride salt. US 2010/0196242 A1 refers to a method of forming hydrogen gas utilizing an alcoholysis reaction of a borohydride component and a glycerol component to form hydrogen gas. US 2007/0172417 A1 describes durable, highly active supported catalysts and systems for hydrogen generation from, for example, the hydrolysis of boron hydride compounds. EP 1 369 947 A1 describes a hydrogen generating method in which a solution A comprising 5-50 % NaBH₄, 5-40% NaOH and balance water is mixed with a solution B comprising 51-100% water and 49-0% of a water-soluble water additive.

Though the known methods for generating hydrogen provide relatively high amounts of hydrogen, the hydrogen release from sodium borohydride still needs to be improved.

Therefore, there is a continuous need for alternative methods for generating hydrogen from sodium borohydride, which provide a better efficiency than existing hydrogen generating systems and effectively improve and facilitate the storage, handling, dosing and transportation of sodium borohydride.

Accordingly, it is an object of the present invention to provide an efficient method for generating hydrogen from sodium borohydride. Furthermore, it is an object of the present invention that a quick and highly controlled release of hydrogen is ensured. In addition thereto, it is an object of the present invention that the safety requirements during storage, transportation, dosing and handling can be reduced and, thus, also reduces the costs for hydrogen generation. Further objects can be gathered from the following description of the invention.

This and other objects are solved by the subject-matter of the present invention. According to a first aspect of the present invention, a method for generating hydrogen from sodium borohydride is provided, wherein the method comprises at least the steps of:
a) providing at least one water-free liquid medium,
b) providing sodium borohydride granules comprising sodium borohydride particles having a mean particle size *d*₅₀ of from 1 to 250 nm,
c) providing an aqueous solution,
d) providing at least one catalyst,
e) contacting the liquid medium of step a) with the sodium borohydride granules of step b) such as to obtain a sodium borohydride-containing suspension comprising sodium borohydride particles having a mean particle size *d*₅₀ of from 1 to 250 nm,
f) contacting the sodium borohydride-containing suspension of step e) with the aqueous solution of step c), and
g) contacting the sodium borohydride-containing suspension of step f) with the at least one catalyst of step d).

The inventors found that the foregoing method for generating hydrogen from sodium borohydride according to the present invention is highly efficient and allows a quick and controlled release of hydrogen under safe requirements. More precisely, the inventors found that the release of hydrogen from sodium borohydride can be highly improved by contacting a sodium borohydride-containing suspension comprising sodium borohydride particles having a mean particle size *d*₅₀ of from 1 to 250 nm with an aqueous solution and at least one catalyst.

It should be understood that for the purposes of the present invention, the following terms have the following meanings:
In accordance with the present invention, the term "water-free" liquid medium refers to any organic and/or inorganic liquid medium having a water content of below 1.0 Vol.-%, preferably of below 0.5 Vol.-%, more preferably of below 0.1 Vol.-% and most preferably of below 0.05 Vol.-%, based on the total volume of the liquid medium. In one embodiment of the present invention, the water-free liquid medium is without any water content.

The term "aqueous solution" in the meaning of the present invention refers to systems that comprise, preferably consist of, an aqueous solvent and optionally comprise, preferably contain, dissolved inorganic compounds such as salts and/or organic compounds such as alcohols, ketones, ethers, esters in the aqueous solvent. It is preferred that the aqueous solution contains dissolved salts in the aqueous solvent. The term "dissolved" in the meaning of the present invention refers to systems in which no discrete solid particles are observed in the solvent. In one embodiment of the present invention, the aqueous solution contains discrete solid particles in the aqueous solvent in an amount of ≤ 1 wt.-%, more preferably ≤ 0.5 wt.-%, even more preferably ≤ 0.25 wt.-% and most preferable ≤ 0.1 wt.-%, based on the total weight of the aqueous solution.

A "suspension" in the meaning of the present invention comprises insoluble sodium borohydride particles dispersed in a liquid medium and optionally further additives and usually contains large amounts of sodium borohydride particles and, thus, is more viscous and generally of higher density than the liquid medium from which it is formed. It is accepted in the art that the general term "dispersion" inter alia covers "suspensions" as a specific type of dispersion.

The term "mean particle size *d*₅₀" in the meaning of the present invention is defined as the size at which 50 % (the median point) of the particle volume or mass is accounted for by particles having a diameter equal to the specified value.

For determining the mean particle size *d*₅₀ value for particles having a *d*₅₀ value a scanning electron microscope (SEM, Hitachi S-5500) can be used. The method and the instrument are known to the skilled person and are commonly used to determine particle sizes of solid materials.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

According to another aspect of the present invention, a sodium borohydride-containing suspension comprising a) at least one water-free liquid medium and b) sodium borohydride particles having a mean particles size *d*₅₀ of from 1 to 250 nm is provided. It is preferred that the suspension comprises an amount of sodium borohydride in the range from 40 to 80 wt.-%, preferably in the range from 50 to 70 wt.-%, based on the total weight of the suspension. According to a further aspect, the present invention refers to sodium borohydride particles having a mean particle size *d*₅₀ of from 1 to 250 nm for generating hydrogen.

According to one embodiment of the inventive method, the at least one water-free liquid medium of step a) is free of metal salts and/or non-reductive agents.

According to another embodiment of the inventive method, the at least one water-free liquid medium is an organic and/or inorganic liquid medium, preferably the at least one water-free liquid medium of step a) is selected from the group comprising silicon oil, glycerine, ethylene glycol, hexane, petrol and mixtures thereof.

According to yet another embodiment of the inventive method, the sodium borohydride granules of step b) comprise sodium borohydride particles having a mean particle size *d*₅₀ of from 1 to 150 nm, preferably of from 1 to 100 nm.

According to one embodiment of the inventive method, the aqueous solution of step c) comprises water in an amount of at least 30 wt.-%, preferably at least 50 wt.-% and most preferably at least 90 wt.-%, based on the total weight of the aqueous solution.

According to another embodiment of the inventive method, the at least one catalyst of step d) is selected from metal particles and/or metal salts.

According to yet another embodiment of the inventive method, the at least one catalyst of step d) is provided in form of a catalyst solution or catalyst suspension.

According to one embodiment of the inventive method, contacting step e) is carried out such that the sodium borohydride-containing suspension comprises an amount of sodium borohydride in the range from 40 to 80 wt.-%, preferably in the range from 50 to 70 wt.-%, based on the total weight of the suspension.

According to another embodiment of the inventive method, contacting step e) and/or contacting step f) and/or contacting step g) is/are carried out under mixing.

According to yet another embodiment of the inventive method, contacting step f) is carried out after step e).

According to one embodiment of the inventive method, contacting step g) is carried out during and/or after step f), preferably after step f).

According to another embodiment of the inventive method, contacting step e) is carried out under atmospheric pressure and/or contacting step f) and/or contacting step g) is/are carried out under atmospheric pressure and/or elevated pressure.

As set out above, the inventive method for generating hydrogen from sodium borohydride comprises the steps a), b), c), d), e), f) and g). In the following, it is referred to further details of the present invention and especially the foregoing steps of the inventive method for generating hydrogen from sodium borohydride.

According to step a) of the instant method for generating hydrogen from sodium borohydride, at least one water-free liquid medium is provided. There are no specific restrictions regarding the at least one water-free liquid medium provided that the at least one liquid medium is water-free.

Accordingly, the at least one water-free liquid medium may be any kind of organic and/or inorganic liquid medium having a water content of below 1.0 Vol.-%, preferably of below 0.5 Vol.-%, more preferably of below 0.1 Vol.-% and most preferably of below 0.05 Vol.-%, based on the total volume of the liquid medium. In one preferred embodiment of the present invention, the water-free liquid medium is without any water content.

In one embodiment of the present invention, the at least one water-free liquid medium is an organic and/or inorganic liquid medium. In one embodiment of the present invention, the at least one water-free liquid medium is selected from the group comprising silicon oil, glycerine, ethylene glycol, hexane, petrol and mixtures thereof.

For example, the at least one water-free liquid medium is an organic and inorganic liquid medium. Alternatively, the at least one water-free liquid medium is an organic or inorganic liquid medium. In one embodiment of the present invention, the at least one water-free liquid medium is an inorganic liquid medium.

If the at least one water-free liquid medium is an inorganic liquid medium, the liquid medium is preferably silicone oil.

If the at least one water-free liquid medium is an organic liquid medium, the liquid medium is selected from the group comprising glycerine, ethylene glycol, hexane, petrol and mixtures thereof.

In one embodiment of the present invention, the at least one water-free liquid medium is silicon oil.

The term "at least one" water-free liquid medium means that one or more kinds of liquid medium can be provided.

Accordingly, it should be noted that the at least one water-free liquid medium may be a mixture of two or more kinds of liquid mediums. For example, if the at least one water-free liquid medium is a mixture of two or more liquid mediums, one liquid medium is silicon oil, while the second or further liquid medium is selected from the group comprising glycerine, ethylene glycol, hexane, petrol and mixtures thereof.

It is preferred that the at least one water-free liquid medium comprises silicon oil in an amount of at least 50 Vol.-%, more preferably of at least 60 Vol.-%, even more preferable of at least 70 Vol.-% and most preferably of at least 80 Vol.-%, based on the total volume of the at least one water-free liquid medium provided in step a). For example, the at least one water-free liquid medium comprises silicon oil in an amount of at least 90 Vol.-% or of at least 98 Vol.-%, based on the total volume of the at least one water-free liquid medium provided in step a).

In this regard, it is appreciated that even if the at least one water-free liquid medium comprises a mixture of liquid mediums, the overall water content of said mixture does not exceed 1.0 Vol.-%, based on the total volume of the at least one liquid medium. It is preferred that the overall water content of said mixture is of below 0.5 Vol.-%, more preferably of below 0.1 Vol.-% and most preferably of below 0.05 Vol.-%, based on the total volume of the at least one liquid medium. In one embodiment of the present invention, the water-free liquid medium is without any water content.

In one embodiment of the present invention, the at least one water-free liquid medium is one kind of liquid medium. For example, the at least one water-free liquid medium consists of silicon oil.

In one embodiment of the present invention, the at least one water-free liquid medium provided in step a) is free of metal salts. In accordance with the present invention, the term "free of metal salts" refers to a liquid having a salts content of below 0.1 wt.-%, preferably of below 0.05 wt.-%, more preferably of below 0.01 wt.-% and most preferably of below 0.005 wt.-%, based on the total weight of the at least one liquid medium. In one embodiment of the present invention, the water-free liquid medium is free of any metal salts.

For example, the at least one water-free liquid medium is free of hydroxide salts. It is preferred that the at least one water-free liquid medium is free of hydroxide salts, wherein the cation part of the hydroxide salt is identical with the cation part of the metal borohydride. That is to say, the at least one water-free liquid medium is free of sodium hydroxide.

Additionally or alternatively, the at least one water-free liquid medium provided in step a) is free of non-reductive agents. In accordance with the present invention, the term "non-reductive" refers to a liquid medium comprising reductive agents in an amount of below 0.1 wt.-%, preferably of below 0.05 wt.-%, more preferably of below 0.01 wt.-% and most preferably of below 0.005 wt.-%, based on the total weight of the at least one liquid medium. In one embodiment of the present invention, the water-free liquid medium is free of any non-reductive agents.

Typically, the at least one water-free liquid medium according to the present invention has a viscosity at room temperature in the range from 0.3 to 30 000 mPa·s, preferably in the range from 0.3 to 20 000 mPa·s and more preferably in the range from 0.3 to 10 000 mPa·s, as measured with a Brookfield viscometer. For example, the at least one water-free liquid medium according to the present invention has a viscosity at room temperature in the range from 100 to 10 000 mPa·s and more preferably in the range from 500 to 8 000 mPa·s, e.g. of about 5 000 mPa·s.

According to step b) of the method of the present invention, sodium borohydride granules are provided.

The term "sodium borohydride granules" in the meaning of the present invention refers to granules merely composed of sodium borohydride (NaBH₄) particles. Accordingly, the sodium borohydride granules comprise, preferably consist of, sodium borohydride particles.

The sodium borohydride granules may be of various size and shape. However, in order to facilitate the dispersion of the sodium borohydride granules in the at least one water-free liquid medium according to step e) it is preferred that the granules have a particle size *d*₅₀ of below 5 mm, more preferably of below 1 mm, even more preferably of below 750 µm and most preferably of below 500 µm, as measured using optical microscopy.

It is appreciated that the expression "granules" means that one or more granules may be provided in the present method. According to one embodiment of the present invention, only one granule is provided in the present method. According to another embodiment of the present invention, two or more granules are provided in the present method. For example, two or more granules are provided in the present method.

If two or more granules are provided in the present method, the granules may be of different or uniform size and/or shape.

In one embodiment of the present invention, one or more kind of granules may be provided in the present method. According to one embodiment of the present invention, only one kind of granules is provided in the present method. According to another embodiment of the present invention, two or more kinds of granules are provided in the present method. For example, two or more kinds of granules are provided in the present method.

If two or more kinds of granules are provided in the present method, the granules may comprise sodium borohydride particles of different or uniform particle size distribution.

One specific requirement of the present invention is that the sodium borohydride granules comprise sodium borohydride particles having a mean particle size *d*₅₀ of from 1 to 250 nm.

The term "sodium borohydride particles" in the meaning of the present invention refers to particles merely composed of sodium borohydride (NaBH₄), also named sodium tetrahydroborate. Accordingly, the sodium borohydride particles comprise, preferably consist of, sodium borohydride.

However, it is not excluded that the sodium borohydride particles may comprise smaller amounts of other components provided that such other components do not hinder the hydrogen generation by contacting the sodium borohydride-containing suspension with the aqueous solution.

If the sodium borohydride particles comprise smaller amounts of other components, such other components are present in the sodium borohydride particles in an amount of below 1 wt.-%, preferably of below 0.75 wt.-%, more preferably of below 0.5 wt.-% and most preferably of below 0.25 wt.-%, based on the total weight of the sodium borohydride particles.

Accordingly, the sodium borohydride particles comprise sodium borohydride in an amount of at least 95 wt.-%, preferably of at least 98 wt.-%, more preferably of at least 99 wt.-% and most preferably of at least 99.99 wt.-%, based on the total weight of the sodium borohydride particles. In one embodiment of the present invention, the sodium borohydride particles comprise sodium borohydride in an amount of about 100 wt.-%, based on the total weight of the sodium borohydride particles.

The other components may be borohydrides being different from sodium borohydride and/or metal hydroxides. For example, such other components may be selected from ammonium borohydride, lithium borohydride, potassium borohydride, rubidium borohydride, sodium hydroxide, lithium hydroxide, potassium hydroxide, rubidium hydroxide and mixtures thereof.

As already mentioned, the sodium borohydride granules of step b) comprise sodium borohydride particles having a mean particle size *d*₅₀ of from 1 to 250 nm.

In one embodiment of the present invention, the sodium borohydride granules of step b) comprise sodium borohydride particles having a mean particle size *d*₅₀ of from 1 to 150 nm, as measured using scanning electron microscopy (SEM). For example, the sodium borohydride granules of step b) comprise sodium borohydride particles having a mean particle size *d*₅₀ of from 1 to 100 nm, as measured using scanning electron microscopy (SEM).

Additionally or alternatively, it should be noted that the sodium borohydride particles of the sodium borohydride granules of step b) may have a specific particle size distribution. In general, the sodium borohydride particles of the sodium borohydride granules of step b) have a *d*₉₈ of below 250 nm as measured by the well known technique of scanning electron microscopy. In one embodiment of the present invention, the sodium borohydride particles of the sodium borohydride granules of step b)have a *d*₉₈ in the range of from 1 to 250 nm, preferably in the range of from 1 to 150 nm and most preferably in the range of from 1 to 100 nm.

Throughout the present document, the "particle size" of sodium borohydride particles is described by its distribution of particle sizes. The value *dₓ* represents the diameter relative to which *x %* by weight of the particles have diameters less than *d*ₓ. This means that the *d*₂₀ value is the particle size at which 20 wt.-% of all particles are smaller, and the *d*₇₅ value is the particle size at which 75 wt.-% of all particles are smaller. The *d*₉₈ value is thus the weight median particle size, i.e. 98 wt.-% of all grains are smaller than this particle size.

According to step c) of the present invention, an aqueous solution is provided.

An aqueous solution is understood to be a solution comprising water. In one embodiment of the present invention, the aqueous solution comprises water in an amount of at least 30 wt.-%, preferably 50 wt.-% and most preferably at least 90 wt.-%, based on the total weight of the aqueous solution. For example, the aqueous solution provided in step c) comprises water in an amount of between 90 and 99 wt. -% or of between 95 and 98 wt -%, based on the total weight of the aqueous solution.

In one embodiment of the present invention, the aqueous solution can comprise a mixture of water and at least one water-miscible solvent and optionally at least one inorganic salt, e.g. at least one inorganic salt selected from the group comprising sodium chloride (NaCI), potassium chloride (KCI), sodium carbonate (Na₂CO₃), sodium bicarbonate (NaHCO₃), magnesium bicarbonate (Mg(HCO₃)₂), calcium bicarbonate (Ca(HCO₃)₂) and the like. The at least one water-miscible solvent may be selected from the group comprising methanol, ethanol, acetone, esters, ethers and mixtures thereof. For example, the aqueous solution can comprise at least one water-miscible solvent in an amount of below 70 wt.-%, preferably of below 50 wt.-% and most preferably of below 10 wt.-%, based on the total weight of the aqueous solution. For example, the aqueous solution provided in step c) can comprise at least one water-miscible solvent in an amount of between 1 and 10 wt. -% or of between 2 and 5 wt -%, based on the total weight of the aqueous solution.

For example, the aqueous solution provided in step c) can comprises at least one water-miscible solvent in an amount of between 1 and 10 wt.-% and water in an amount of between 90 and 99 wt.-% or the aqueous solution provided in step c) can comprises at least one water-miscible solvent in an amount of between 2 and 5 wt.-% and water in an amount of between 95 and 98 wt.-%, based on the total weight of the aqueous solution.

According to step d) of the method of the present invention, at least one catalyst is provided.

In one embodiment of the present invention, the hydrogen generation from sodium borohydride is carried out in the presence of at least one suitable catalyst.

It is appreciated that the at least one catalyst may be any catalyst system promoting the hydrogen generation from sodium borohydride particles. The at least one catalyst may be in the form of a powder, dust, pellets, chips and mixtures thereof. In one embodiment of the present invention, the at least one catalyst is in form of a powder.

For example, the at least one catalyst comprises metal particles and/or metal salts. In one embodiment of the present invention, the at least one catalyst of step d) is provided in form of a catalyst solution or catalyst suspension. For example, if the at least one catalyst comprises metal salt, the at least one catalyst is preferably provided in form of a catalyst solution. Alternatively, if the at least one catalyst comprises metal particles, the at least one catalyst is preferably provided in form of a catalyst suspension.

If the at least one catalyst comprises metal particles, the at least one catalyst is preferably in the form of metal dust or metal powder. In one embodiment of the present invention, the at least one catalyst comprises metal particles selected from the group comprising copper, silver, gold, iron, nickel, cobalt, palladium, platinum, chromium, molybdenum, tungsten and mixtures thereof. For example, the at least one catalyst comprises iron dust or iron powder.

In one embodiment of the present invention, the at least one catalyst comprises metal particles, which are provided in form of a catalyst suspension.

The catalyst suspension comprises the at least one catalyst preferably in an amount of below 25 wt.-%, more preferably of below 15 wt.-%, even more preferably of below 10 wt.-% and most preferably of below 5 wt.-%, based on the total weight of the catalyst suspension. For example, the catalyst suspension comprises the at least one catalyst in an amount of between 0.01 and 25 wt.-%, more preferably of between 0.1 and 15 wt.-%, even more preferably of between 0.5 and 10 wt.-% and most preferably of between 1 and 5 wt.-%, based on the total weight of the catalyst suspension.

If the at least one catalyst is provided in form of a catalyst suspension, catalyst suspension comprises water in an amount of between 75 and 99.99 wt.-%, preferably of between 85 and 99 wt.-%, more preferably of between 90 and 98.5 wt.-% and most preferably of between 95 and 98 wt.-%, based on the total weight of the catalyst suspension.

In one embodiment of the present invention, the catalyst suspension contains discrete solid catalyst particles in the aqueous solvent in an amount of ≤ 10 wt.-%, more preferably ≤ 7.5 wt.-%, even more preferably ≤ 5 wt.-% and most preferable ≤ 2 wt.-%, based on the total weight of the catalyst suspension. For example, the catalyst suspension contains discrete solid catalyst particles in the aqueous solvent in an amount of between 0.1 and 5 wt.-% or of between 1 and 2 wt.-%, based on the total weight of the catalyst suspension.

If the at least one catalyst comprises metal salts, the at least one catalyst is preferably in the form of a metal salt powder. In one embodiment of the present invention, the at least catalyst comprises metal salts selected from the group comprising iron(II) chloride, iron(III) chloride, iron(II) nitrate, iron(III) nitrate, iron(II) acetate, iron(III) acetate, copper chloride, copper nitrate, copper acetate, palladium chloride, palladium nitrate, palladium acetate, gold chloride, gold nitrate, gold acetate, platinum(II) chloride, platinum(II) nitrate, platinum(II) acetate, platinum(IV) chloride, platinum(IV) nitrate, platinum(IV) acetate, nickel(II) chloride, nickel(III) chloride, cobalt(II) chloride, cobalt(III) chloride, chromium(III) chloride, cadmium chloride and mixtures thereof.

For example, the at least one catalyst comprises metal salts selected from the group comprising iron(II) chloride, iron(III) chloride, iron(II) nitrate, iron(III) nitrate, iron(II) acetate, iron(III) acetate and mixtures thereof. In one embodiment of the present invention, the at least one catalyst comprises iron(II) chloride and/or iron(III) chloride.

In one embodiment of the present invention, the at least one catalyst comprises metal salts which are provided in form of a catalyst solution.

If the catalyst solution comprises at least one catalyst comprising metal salts, the catalyst solution comprises the at least one catalyst preferably in an amount of below 25 wt.-%, more preferably of below 15 wt.-%, even more preferably of below 10 wt.-% and most preferably of below 5 wt.-%, based on the total weight of the catalyst solution. For example, the catalyst solution comprises the at least one catalyst in an amount of between 0.01 and 25 wt.-%, more preferably of between 0.1 and 15 wt.-%, even more preferably of between 0.5 and 10 wt.-% and most preferably of between 1 and 5 wt.-%, based on the total weight of the catalyst solution.

If the catalyst solution comprises at least one catalyst, the catalyst solution provided in step c) comprises water in an amount of between 75 and 99.99 wt.-%, preferably of between 85 and 99.9 wt.-%, more preferably of between 90 and 99.5 wt.-% and most preferably of between 95 and 99 wt.-%, based on the total weight of the catalyst solution.

In one embodiment of the present invention, the catalyst solution contains discrete solid catalyst particles in the aqueous solvent in an amount of ≤ 5 wt.-%, more preferably ≤ 2.5 wt.-%, even more preferably ≤ 1 wt.-% and most preferable ≤ 0.5 wt.-%, based on the total weight of the catalyst solution. For example, the catalyst solution contains discrete solid catalyst particles in the aqueous solvent in an amount of between 0.01 and 1 wt.-% or of between 0.01 and 0.5 wt.-%, based on the total weight of the catalyst solution.

The particles of the at least one catalyst preferably have a mean particle size *d*₅₀ of from 0.5 to 250 nm, more preferably of from 1 to 150 nm, even more preferably of from 1 to 100 nm and most preferably of from 1 to 50 nm.

According to step e) of the present invention, the at least one water-free liquid medium of step a) is contacted with the sodium borohydride granules of step b) such as to obtain a sodium borohydride-containing suspension comprising sodium borohydride particles having a mean particle size *d*₅₀ of from 1 to 250 nm.

In the method of the present invention, the contacting of the sodium borohydride granules with the at least one water-free liquid medium is preferably carried out by mixing the sodium borohydride granules with the at least one water-free liquid medium. "Mixing" in the sense of the present invention can be effected by any conventional mixing process known to the skilled person. Preferably, the mixing is carried out under continuous milling, agitation and/or stirring in order to evenly decrease the size of the sodium borohydride granules and contact the sodium borohydride particles being part of the sodium borohydride granules of step b) with the at least one water-free liquid medium of step a).

The sodium borohydride granules are preferably added to the at least one water-free liquid medium such that the resulting sodium borohydride-containing suspension of step e) comprises an amount of sodium borohydride in the range from 40 to 80 wt.-%, preferably in the range from 50 to 70 wt.-%, based on the total weight of the suspension. For example, the resulting sodium borohydride-containing suspension of step e) comprises sodium borohydride in an amount of from 55 to 65 wt.-%, like about 60 wt.-%, based on the total weight of the suspension obtained in step e).

Preferably, contacting step e) is carried at a temperature of at least 10 °C, preferably at least 15 °C, more preferably between 18 °C and 60 °C and most preferably between 18 °C and 40 °C. In one embodiment of the present invention, contacting step e) is carried out at room temperature, e.g. at a temperature of between 18 and 25 °C. Additionally or alternatively, contacting step e) is carried out at a constant temperature.

In one embodiment of the present invention, contacting step e) is carried out under atmospheric pressure.

After contacting step e) has been carried out, the sodium borohydride-containing suspension thus obtained can be immediately subjected to method step f) and g). Alternatively, the sodium borohydride-containing suspension thus obtained can be stored and/or transported before being subjected to method step f) and g) of the present invention.

In one embodiment of the present invention, the sodium borohydride-containing suspension obtained in step e) can be stored at temperatures between 5°C and 60 °C, more preferably between 10 °C and 40 °C and most preferably of about room temperature, for example, between 18 °C and 25 °C, before being subjected to method step f) and g) of the present invention.

For example, the sodium borohydride-containing suspension obtained in step e) can be stored for at least 24 hours, preferably of at least 1 month, more preferably of at least 6 months and most preferably of at least 1 year, before being subjected to method step f) and g) of the present invention.

According to method step f) of the present invention, the sodium borohydride-containing suspension obtained in step e) is contacted with the aqueous solution of step c).

In the method of the present invention, the contacting of the sodium borohydride-containing suspension with the aqueous solution is preferably carried out by mixing the sodium borohydride-containing suspension with the aqueous solution. "Mixing" in the sense of the present invention can be effected by any conventional mixing process known to the skilled person. Preferably, the mixing is carried out under continuous agitation and/or stirring in order to evenly contact the sodium borohydride-containing suspension obtained in step e) with the aqueous solution of step c). Alternatively, the mixing is carried out under shaking conditions in order to evenly contact the sodium borohydride particles in the sodium borohydride-containing suspension obtained in step e) with the aqueous solution of step c).

In one embodiment of the present invention, contacting step f) is carried out after step e).

The amount of aqueous solution added to the sodium borohydride-containing suspension obtained in step e) is not critical and thus not restricted to a specific amount. However, in order to generate a sufficient amount of hydrogen from the sodium borohydride-containing suspension obtained in step e), the aqueous solution is added to the sodium borohydride-containing suspension in an amount of at least 50 wt.-%, preferably of at least 60 wt.-% and most preferably of at least 70 wt.-%, based on the total weight of sodium borohydride in the suspension obtained in step e). For example, the aqueous solution is added to the sodium borohydride-containing suspension in an amount of between 50 and 100 wt.-%, preferably of between 60 and 90 wt.-% and most preferably of between 70 and 80 wt.-%, based on the total weight of sodium borohydride in the suspension obtained in step e).

Preferably, contacting step f) is carried out at a temperature of at least 10 °C, preferably at least 15 °C, more preferably between 18 °C and 60 °C and most preferably between 18 °C and 40 °C. In one embodiment of the present invention, contacting step f) is carried out at room temperature, e.g. at a temperature of between 18 and 25 °C. Additionally or alternatively, contacting step f) is carried out at a constant temperature.

In one embodiment of the present invention, contacting step f) is carried out under atmospheric pressure and/or elevated pressure. For example, contacting step f) is carried out under atmospheric pressure. Alternatively, contacting step f) is carried out under atmospheric pressure and elevated pressure. In one embodiment of the present invention, contacting step f) is carried out in that the pressure at the beginning of contacting step f) is of atmospheric pressure and in that the pressure during contacting step f) increases due to the release of hydrogen. For example, the pressure during contacting step f) increases to a pressure of up to about 100 bar.

In order to promote the decomposition of the sodium borohydride particles in the sodium borohydride-containing suspension, the suspension of contacting step f) is further contacted with at least one catalyst.

It is thus one requirement of the present invention that the sodium borohydride-containing suspension of step f) is contacted with the at least one catalyst of step d) according to method step g).

In the method of the present invention, the contacting of the sodium borohydride-containing suspension with the at least one catalyst according to method step g) is preferably carried out by mixing the sodium borohydride-containing suspension of step f) with the at least one catalyst. "Mixing" in the sense of the present invention can be effected by any conventional mixing process known to the skilled person. Preferably, the mixing is carried out under continuous agitation and/or stirring in order to evenly contact the sodium borohydride-containing suspension of step f) with the at least one catalyst of step d). Alternatively, the mixing is carried out under shaking conditions in order to evenly contact the sodium borohydride particles in the sodium borohydride-containing suspension of step f) with the at least one catalyst of step d).

In one embodiment of the present invention, contacting step g) is carried out during and after step f). Alternatively, contacting step g) is carried out during or after step f). For example, contacting step g) is carried out after step f).

The amount of the at least one catalyst added to the sodium borohydride-containing suspension of step f) is not critical and thus not restricted to a specific amount. However, in order to generate a sufficient amount of hydrogen from the sodium borohydride-containing suspension of step f), the at least one catalyst is added to the sodium borohydride-containing suspension in an amount of at least 0.01 wt.-%, preferably of at least 0.1 wt.-% and most preferably of at least 0.5 wt.-%, based on the total weight of sodium borohydride in the suspension of step f). For example, the at least one catalyst is added to the sodium borohydride-containing suspension in an amount of between 0.01 and 25 wt.-%, preferably of between 0.1 and 15 wt.-%, even more preferably of between 0.5 and 10 wt.-% and most preferably of between 1 and 5 wt.-%, based on the total weight of sodium borohydride in the suspension of in step f).

Preferably, contacting step g) is carried out at a temperature of at least 10 °C, preferably at least 15 °C, more preferably between 18 °C and 60 °C and most preferably between 18 °C and 40 °C. In one embodiment of the present invention, contacting step g) is carried out at room temperature, e.g. at a temperature of between 18 and 25 °C. Additionally or alternatively, contacting step g) is carried out at a constant temperature.

In one embodiment of the present invention, contacting step g) is carried out under atmospheric pressure and/or elevated pressure. For example, contacting step g) is carried out under atmospheric pressure. Alternatively, contacting step g) is carried out under atmospheric pressure and elevated pressure. In one embodiment of the present invention, contacting step g) is carried out in that the pressure at the beginning of contacting step g) is of atmospheric pressure and in that the pressure during contacting step g) increases due to the release of hydrogen. For example, the pressure during contacting step g) increases to a pressure of up to about 100 bar.

The sodium borohydride-containing suspension obtained in step e) is preferably contacted with the aqueous solution of step c) and the at least one catalyst of step d) within 1 year after contacting step e) has been carried out, more preferably within 6 month, even more preferably within 1 month and most preferably within 24 hours. In particular, the sodium borohydride-containing suspension obtained in step e) is contacted with the aqueous solution of step c) and the at least one catalyst of step d) within 12 hours after contacting step e) has been carried out, preferably within 6 hours, more preferably within 4 hours, even more preferably within 2 hours and most preferably within 1 hour.

The aqueous solution of step c) and/or the at least one catalyst of step d) may, for example, be added to the sodium borohydride-containing suspension according to method step f) and/or method step g) in one or more portions or continuously over a period of 15 min or less, preferably over a period of 10 min or less, more preferably over a period of 5 min or less.

The hydrogen generation from sodium borohydride in accordance with the present invention is clearly improved in comparison to corresponding methods implementing conventional powders, pellets and granules, i.e. by contacting sodium borohydride particles having mean particle sizes of above 500 nm in the absence of at least one water-free liquid medium with water. Furthermore, the sodium borohydride-containing suspension obtained in step e) is highly protected against unwanted decomposition and allows for reduced safety requirements during storage, transportation, dosing and handling and, thus, also reduces the costs for hydrogen generation. In addition thereto, the instant method ensures a quick and highly controlled release of hydrogen and thus provides an efficient method for generating hydrogen from sodium borohydride.

In view of the very good results obtained regarding the generation of hydrogen as defined above, a further aspect of the present invention refers to a sodium borohydride-containing suspension comprising a) at least one water-free liquid medium and b) sodium borohydride particles having a mean particles size *d*₅₀ of from 1 to 250 nm. It is preferred that the sodium borohydride-containing suspension comprises an amount of sodium borohydride in the range from 40 to 80 wt.-%, preferably in the range from 50 to 70 wt.-%, based on the total weight of the suspension.

With regard to the definition of the sodium borohydride-containing suspension, the at least one water-free liquid medium, the sodium borohydride, and preferred embodiments thereof, reference is made to the comments provided above when discussing method steps a), b) and e).

A further aspect of the present invention is the use of sodium borohydride particles having a mean particle size *d*₅₀ of from 1 to 250 nm for generating hydrogen. With regard to the definition of the sodium borohydride particles, and preferred embodiments thereof, reference is made to the comments provided above when discussing method step b).

## Claims

1. A method for generating hydrogen from sodium borohydride, the method comprising at least the steps of:
a) providing at least one water-free liquid medium,
b) providing sodium borohydride granules comprising sodium borohydride particles having a mean particle size *d*₅₀ of from 1 to 250 nm,
c) providing an aqueous solution,
d) providing at least one catalyst,
e) contacting the liquid medium of step a) with the sodium borohydride granules of step b) such as to obtain a sodium borohydride-containing suspension comprising sodium borohydride particles having a mean particle size *d*₅₀ of from 1 to 250 nm,
f) contacting the sodium borohydride-containing suspension of step e) with the aqueous solution of step c), and
g) contacting the sodium borohydride-containing suspension of step f) with the at least one catalyst of step d).

2. The method according to claim 1, wherein the at least one water-free liquid medium of step a) is free of metal salts and/or non-reductive agents.

3. The method according to claim 1 or 2, wherein the at least one water-free liquid medium of step a) is an organic and/or inorganic liquid medium, preferably the at least one water-free liquid medium of step a) is selected from the group comprising silicon oil, glycerine, ethylene glycol, hexane, petrol and mixtures thereof.

4. The method according to any one of claims 1 to 3, wherein the sodium borohydride granules of step b) comprise sodium borohydride particles having a mean particle size *d*₅₀ of from 1 to 150 nm, preferably of from 1 to 100 nm.

5. The method according to any one of claims 1 to 4, wherein the aqueous solution of step c) comprises water in an amount of at least 30 wt.-%, preferably at least 50 wt.-% and most preferably at least 90 wt.-%, based on the total weight of the aqueous solution.

6. The method according to any one of claims 1 to 5, wherein the at least one catalyst of step d) is selected from metal salts and/or metal particles.

7. The method according to any one of claims 1 to 6, wherein the at least one catalyst of step d) is provided in form of a catalyst solution or catalyst suspension.

8. The method according to any one of claims 1 to 7, wherein contacting step e) is carried out such that the sodium borohydride-containing suspension comprises an amount of sodium borohydride in the range from 40 to 80 wt.-%, preferably in the range from 50 to 70 wt.-%, based on the total weight of the suspension.

9. The method according to any one of claims 1 to 8, wherein contacting step e) and/or contacting step f) and/or contacting step g) is/are carried out under mixing.

10. The method according to any one of claims 1 to 9, wherein contacting step f) is carried out after step e).

11. The method according to any one of claims 1 to 10, wherein contacting step g) is carried out during and/or after step f), preferably after step f).

12. The method according to any one of claims 1 to 11, wherein contacting step e) is carried out under atmospheric pressure and/or contacting step f) and/or contacting step g) is/are carried out under atmospheric pressure and/or elevated pressure.

13. A sodium borohydride-containing suspension comprising a) at least one water-free liquid medium as defined in any one of claims 1 to 3 and b) sodium borohydride particles having a particles size *d*₅₀ of from 1 to 250 nm as defined in any one of claims 1 or 4.

14. The sodium borohydride-containing suspension of claim 13, wherein the suspension comprises an amount of sodium borohydride in the range from 40 to 80 wt.-%, preferably in the range from 50 to 70 wt.-%, based on the total weight of the suspension.

15. Use of sodium borohydride particles having a mean particle size *d*₅₀ of from 1 to 250 nm as defined in any one of claims 1 or 4 for generating hydrogen.

## Patentansprüche

1. Verfahren zur Erzeugung von Wasserstoff aus Natriumborhydrid, wobei das Verfahren mindestens folgende Schritte umfasst:
a) Bereitstellen mindestens eines wasserfreien flüssigen Mediums,
b) Bereitstellen von Natriumborhydrid-Granulat, das Natriumborhydrid-Teilchen mit einer mittleren Teilchengröße *d*₅₀ von 1 bis 250 nm umfasst,
c) Bereitstellen einer wässrigen Lösung,
d) Bereitstellen mindestens eines Katalysators,
e) Inkontaktbringen des flüssigen Mediums aus Schritt a) mit dem Natriumborhydrid-Granulat aus Schritt b) zum Erhalt einer Natriumborhydrid enthaltenden Suspension, die Natriumborhydrid-Teilchen mit einer mittleren Teilchengröße *d*₅₀ von 1 bis 250 nm umfasst,
f) Kontaktieren der Natriumborhydrid enthaltenden Suspension aus Schritt e) mit der wässrigen Lösung aus Schritt c) und
g) Kontaktieren der Natriumborhydrid enthaltenden Suspension aus Schritt f) mit dem mindestens einen Katalysator aus Schritt d).

2. Verfahren nach Anspruch 1, wobei das mindestens eine wasserfreie flüssige Medium von Schritt a) frei von Metallsalzen und/oder nichtreduzierenden Mitteln ist.

3. Verfahren nach Anspruch 1 oder 2, wobei es sich bei dem mindestens einen wasserfreien flüssigen Medium von Schritt a) um ein organisches und/oder anorganisches flüssiges Medium handelt, vorzugsweise das mindestens eine wasserfreie flüssige Medium von Schritt a) aus der Gruppe umfassend Silikonöl, Glycerin, Ethylenglykol, Hexan, Benzin und Mischungen davon ausgewählt wird.

4. Verfahren nach einem der Ansprüche 1 bis 3, wobei das Natriumborhydrid-Granulat von Schritt b) Natriumborhydrid-Teilchen mit einer mittleren Teilchengröße *d*₅₀ von 1 bis 150 nm, vorzugsweise von 1 bis 100 nm, umfasst.

5. Verfahren nach einem der Ansprüche 1 bis 4, wobei die wässrige Lösung von Schritt c) Wasser in einer Menge von mindestens 30 Gew.-%, vorzugsweise mindestens 50 Gew.-% und ganz besonders bevorzugt mindestens 90 Gew.-%, bezogen auf das Gesamtgewicht der wässrigen Lösung, umfasst.

6. Verfahren nach einem der Ansprüche 1 bis 5, wobei der mindestens eine Katalysator von Schritt d) aus Metallsalzen und/oder Metallteilchen ausgewählt ist.

7. Verfahren nach einem der Ansprüche 1 bis 6, wobei der mindestens eine Katalysator von Schritt d) in Form einer Katalysatorlösung oder Katalysatorsuspension bereitgestellt wird.

8. Verfahren nach einem der Ansprüche 1 bis 7, wobei der Kontaktierungsschritt e) so durchgeführt wird, dass die Natriumborhydrid enthaltende Suspension eine Natriumborhydrid-Menge im Bereich von 40 bis 80 Gew.-%, vorzugsweise im Bereich von 50 bis 70 Gew.-%, bezogen auf das Gesamtgewicht der Suspension, umfasst.

9. Verfahren nach einem der Ansprüche 1 bis 8, wobei der Kontaktierungsschritt e) und/oder der Kontaktierungsschritt f) und/oder der Kontaktierungsschritt g) unter Mischen durchgeführt wird/werden.

10. Verfahren nach einem der Ansprüche 1 bis 9, wobei der Kontaktierungsschritt f) nach Schritt e) durchgeführt wird.

11. Verfahren nach einem der Ansprüche 1 bis 10, wobei der Kontaktierungsschritt g) während und/oder nach Schritt f), vorzugsweise nach Schritt f), durchgeführt wird.

12. Verfahren nach einem der Ansprüche 1 bis 11, wobei der Kontaktierungsschritt e) unter Normaldruck durchgeführt wird und/oder der Kontaktierungsschritt f) und/oder der Kontaktierungsschritt g) unter Normaldruck und/oder erhöhtem Druck durchgeführt wird/werden.

13. Natriumborhydrid enthaltende Suspension, umfassend a) mindestens ein wasserfreies flüssiges Medium gemäß einem der Ansprüche 1 bis 3 und b) Natriumborhydrid-Teilchen mit einer mittleren Teilchengröße *d*₅₀ von 1 bis 250 nm gemäß einem der Ansprüche 1 oder 4.

14. Natriumborhydrid enthaltende Suspension nach Anspruch 13, wobei die Suspension eine Natriumborhydrid-Menge im Bereich von 40 bis 80 Gew.-%, vorzugsweise im Bereich von 50 bis 70 Gew.-%, bezogen auf das Gesamtgewicht der Suspension, umfasst.

15. Verwendung von Natriumborhydrid-Teilchen mit einer mittleren Teilchengröße *d*₅₀ von 1 bis 250 nm gemäß einem der Ansprüche 1 oder 4 zur Erzeugung von Wasserstoff.

## Revendications

1. Procédé pour la génération d'hydrogène à partir de borohydrure de sodium, le procédé comprenant au moins les étapes de :
a) mise à disposition d'au moins un milieu liquide exempt d'eau,
b) mise à disposition de granulés de borohydrure de sodium comprenant des particules de borohydrure de sodium possédant une grosseur moyenne de particule *d*₅₀ allant de 1 à 250 nm,
c) mise à disposition d'une solution aqueuse,
d) mise à disposition d'au moins un catalyseur,
e) mise en contact du milieu liquide de l'étape a) avec les granulés de borohydrure de sodium de l'étape b) de sorte à obtenir une suspension contenant du borohydrure de sodium comprenant des particules de borohydrure de sodium possédant une grosseur moyenne de particule *d*₅₀ allant de 1 à 250 nm,
f) mise en contact de la suspension contenant du borohydrure de sodium de l'étape e) avec la solution aqueuse de l'étape c), et
g) mise en contact de la suspension contenant du borohydrure de sodium de l'étape f) avec l'au moins un catalyseur de l'étape d).

2. Procédé selon la revendication 1, l'au moins un milieu liquide exempt d'eau de l'étape a) étant exempt de sels métalliques et/ou d'agents non réducteurs.

3. Procédé selon la revendication 1 ou 2, l'au moins un milieu liquide exempt d'eau de l'étape a) étant un milieu liquide organique et/ou inorganique, préférablement l'au moins un milieu liquide exempt d'eau de l'étape a) étant choisi dans le groupe comprenant l'huile de silicone, la glycérine, l'éthylèneglycol, l'hexane, l'essence et des mélanges correspondants.

4. Procédé selon l'une quelconque des revendications 1 à 3, les granulés de borohydrure de sodium de l'étape b) comprenant des particules de borohydrure de sodium possédant une grosseur moyenne de particule *d*₅₀ allant de 1 à 150 nm, préférablement allant de 1 à 100 nm.

5. Procédé selon l'une quelconque des revendications 1 à 4, la solution aqueuse de l'étape c) comprenant de l'eau en une quantité d'au moins 30 % en poids, préférablement d'au moins 50 % en poids et plus préférablement d'au moins 90 % en poids, sur la base du poids total de la solution aqueuse.

6. Procédé selon l'une quelconque des revendications 1 à 5, l'au moins un catalyseur de l'étape d) étant choisi parmi des sels métalliques et/ou des particules métalliques.

7. Procédé selon l'une quelconque des revendications 1 à 6, l'au moins un catalyseur de l'étape d) étant mis à disposition sous forme d'une solution de catalyseur ou d'une suspension de catalyseur.

8. Procédé selon l'une quelconque des revendications 1 à 7, l'étape de mise en contact e) étant mise en œuvre de sorte que la suspension contenant du borohydrure de sodium comprend une quantité de borohydrure de sodium dans la plage de 40 à 80 % en poids, préférablement dans la plage de 50 à 70 % en poids, sur la base du poids total de la suspension.

9. Procédé selon l'une quelconque des revendications 1 à 8, l'étape de mise en contact e) et/ou l'étape de mise en contact f) et/ou l'étape de mise en contact g) est/sont mise(s) en œuvre sous agitation.

10. Procédé selon l'une quelconque des revendications 1 à 9, l'étape de mise en contact f) étant mise en œuvre après l'étape e).

11. Procédé selon l'une quelconque des revendication 1 à 10, l'étape de mise en contact g) étant mise en œuvre pendant et/ou après l'étape f), préférablement après l'étape f).

12. Procédé selon l'une quelconque des revendications 1 à 11, l'étape de mise en contact e) étant mise en œuvre sous pression atmosphérique et/ou l'étape de mise en contact f) et/ou l'étape de mise en contact g) est/sont mise(s) en œuvre sous pression atmosphérique et/ou sous pression élevée.

13. Suspension contenant du borohydrure de sodium comprenant a) au moins un milieu liquide exempt d'eau tel que défini selon l'une quelconque des revendication 1 à 3 et b) des particules de borohydrure de sodium possédant une grosseur de particules *d*₅₀ allant de 1 à 250 nm telles que définies selon l'une quelconque des revendications 1 à 4.

14. Suspension contenant du borohydrure de sodium selon la revendication 13, la suspension comprenant une quantité de borohydrure de sodium dans la plage de 40 à 80 % en poids, préférablement dans la plage de 50 à 70 % en poids, sur la base du poids total de la suspension.

15. Utilisation de particules de borohydrure de sodium possédant une grosseur moyenne de particule *d*₅₀ allant de 1 à 250 nm telles que définies selon l'une quelconque des revendications 1 à 4 pour la génération d'hydrogène.
